# EUROPÄISCHE PATENTSCHRIFT

(11) **EP 0 521 155 B1**
(45) Veröffentlichungstag und Bekanntmachung des Hinweises auf die Patenterteilung: **24.04.1996**
(21) Anmeldenummer: 92911169.8
(22) Anmeldetag: 02.12.1991
(51) Int. Cl.: H02K 5/22, B60S 1/08, H02K 23/66

(54) **ELEKTRISCHER MOTOR UND VERFAHREN ZU SEINER HERSTELLUNG**
ELECTRIC MOTOR AND PROCESS FOR PRODUCING IT
MOTEUR ELECTRIQUE ET PROCEDE POUR SA FABRICATION

(30) Priorität: 18.01.1991 DE 4101368
(43) Veröffentlichungstag der Anmeldung: 07.01.1993
(73) Patentinhaber: ITT Automotive Europe GmbH, D-60488 Frankfurt am Main (DE)
(72) Erfinder: ADE, Rolf, D-7120 Bietigheim-Bissingen (DE)
(86) Internationale Anmeldenummer: EP9102271
(87) Internationale Veröffentlichungsnummer: WO9213381

(56) Entgegenhaltungen:
- EP-A- 0 308 689
- WO-A-91/03856
- DE-A- 3 228 214
- DE-A- 3 736 388

## Beschreibung

Die Erfindung betrifft zunächst einen elektrischen Motor, insbesondere einen elektrischen Kleinmotor zum Antrieb von Scheibenwischern an Kraftfahrzeugen, der die Merkmale aus dem Oberbegriff des Anspruchs 1 aufweist. Des weiteren betrifft die Erfindung auch ein Verfahren zur Herstellung eines solchen elektrischen Motors.

Aus der DE-OS 38 38 285 ist ein elektrischer Motor bekannt, bei dem ein Getriebetopf mit einem metallischen Deckel, der eine Außen- und eine Innenseite aufweist, verschlossen ist. An den Deckel ist ein Kunststofformteil angespritzt, das sich im wesentlichen außen am Deckel befindet und in das eine aus einem Blech gestanzte Leiterbahn eingebettet ist. In dem Deckel befinden sich ein rundum geschlossener Durchbruch und ein randoffener Durchbruch, in denen jeweils die Leiterbahn von der Außenseite des Deckels auf die Innenseite wechselt. Durch einen weiteren Durchbruch hindurch hintergreift das Kunststofformteil zur besseren Verankerung am Deckel diesen auf seiner Innenseite.

Aus der DE 37 36 388 A1 ist eine elektrische Kontakt- und Anschlußvorrichtung bekannt, bei der in einem Kunststoffformteil, das an einem Deckel angespritzt ist, eine Aufnahme für eine Leiterbahn vorgesehen ist. Diese Aufnahme erstreckt sich durch das Kunststofformteil von der Innenseite des Deckels zur Außenseite. In diesem Durchbruch wird eine Leiterbahn eingelegt, die von einem Verrastelement, das entsprechende Rastvorsprünge aufweist, in dem Kunststofformteil gehalten wird.

Die EP 308 689 A1 beschreibt einen Gußkörper, in den Anschlußstifte eingegossen werden. Sie werden von einem Vierkantdraht abgelängt, angeprägt und gebogen, also schon vor dem Einsetzen in die Gußmasse vereinzelt. Dazu wird eine entsprechende Zuführautomatik benötigt.

Der Erfindung liegt die Aufgabe zugrunde, einen elektrischen Motor mit den Merkmalen aus dem Oberbegriff des Anspruchs 1 so weiterzubilden, daß die Leiterbahn während des Spritzgießens in sicherem Abstand zum Deckel gehalten werden kann. Außerdem soll ein Verfahren zur Herstellung eines solchen elektrischen Motors angegeben werden.

Diese Aufgabe wird für einen elektrischen Motor mit den Merkmalen aus dem Oberbegriff des Anspruchs 1 erfindungsgemäß dadurch gelöst, daß die beim Ausstanzen der Leiterbahnen aus einem Blech zwischen den Leiterbahnen stehengebliebene Verbindungsstege abfallos durchtrennt sind und daß sich die Aussparung im Kunstsofformteil im Bereich eines durchtrennten Verbindungssteges befindet.

Die Aussparung entsteht dadurch, daß die Leiterbahn während des Spritzgießens des Kunststofformteils durch den Durchbruch im Deckel hindurch von einem Niederhalter abgestützt wird. Durch diese Abstützung ist ein sicherer Abstand und damit eine sichere elektrische Isolation der Leiterbahn vom Deckel gewährleistet.

Vorteilhafte Ausgestaltungen eines elektrischen Motors nach dem Anspruch 1 finden sich in den Ansprüchen 2 bis 6.

So befindet sich bevorzugt zwischen der Aussparung und dem Rand des Uurchbruchs im Deckel noch Kunststoffmaterial, so daß das Kunststofformteil durch den Durchbruch im Deckel auch noch an diesem verankert sein kann.

Das Direktumspritzen von Leiterbahnen mit einem Kunststofformteil am Deckel ist besonders vorteilhaft dann, wenn der elektrische Motor einen Getriebetopf aufweist, der eine Kammer für Getriebeteile und eine Kammer für elektrische Bauteile, insbesondere Entstörbauteile, besitzt. Ein solcher elektrischer Motor ist in unserer deutschen Patentanmeldung P 39 30 144.3 (veröffentlicht am 21.03.91) ausführlich beschrieben. Es ist dann besonders vorteilhaft, daß das Kunststofformteil sowohl innerhalb der Kammer für die Getriebeteile als auch innerhalb der Kammer für die elektrischen Bauteile eine bis zu einer Leiterbahn reichende Aussparung hat. Die beiden Aussparungen sind gegeneinander abgeschottet, so daß kein Fett, das zum Schmieren der Getriebeteile dient, in die Kammer für die elektrischen Bauteile und von dort eventuell in das Motorengehäuse mit dem Anker des elektrischen Motors gelangen kann. Ua Stege am Ueckel unterhalb einer gewissen Breite beim Stanzen des Deckels nicht mehr hergestellt werden können, befinden sich die beiden Aussparungen in vorteilhafter Weise innerhalb desselben Durchbruchs im Deckel und sind durch einen Trennsteg des Kunststofformteils voneinander getrennt, der bis zu einer Zwischenwand zwischen den beiden Kammern des Getriebetopfes reicht. Dabei kann sich natürlich zwischen dem Trennsteg und der Zwischenwand noch eine Dichtung befinden. Zweckmäßigerweise fluchtet die Stirnseite des Trennstegs mit der Innenseite des Deckels.

Üblicherweise werden in das Kunststofformteil mehrere Leiterbahnen eingebettet sein, die aus einem Blech ausgestanzt sind und nach dem Stanzvorgang noch durch stehengebliebene Verbindungsstege verbunden sind, so daß sie als ein Teil gehandhabt werden können. Vorteilhafterweise befindet sich nun eine Aussparung im Kunststoffteil im Bereich eines abfallos durchtrennten Verbindungssteges. Bevorzugt werden mehrere, vorzugsweise alle Verbindungsstege in einer Linie hintereinander angeordnet.

Ein Verfahren zur Herstellung eines elektrischen Motors, durch das einerseits ein sicherer Abstand einer Leiterbahn vom Deckel gewährleistet werden kann und durch das außerdem erreichbar ist, daß die Leiterbahnen, abgesehen von eventuellen Flachsteckabschnitten, auf der Außenseite des Deckels völlig von Kunststoff abgedeckt sind, ist im Oberbegriff des Anspruchs 7 angegeben. Dieses Verfahren unterscheidet sich gegenüber dem aus der DE-OS 38 38 285 entnehmbaren Verfahren durch die kennzeichnenden Merkmale des Anspruchs 7.

Vorteilhafte Ausgestaltungen eines solchen Verfahrens nach Anspruch 7 kann man den Unteransprüchen 8 bis 10 entnehmen.

Sind mehrere Leiterbahnen vorhanden, so werden sie zunächst noch über einen oder mehrere Verbindungsstege zusammenhängend aus einem Blech ausgestanzt, dann noch zusammenhängend in das Spritzwerkzeug eingelegt, im Spritzwerkzeug durch einen oder mehrere trennstempel vorzugsweise abfallos durchtrennt und dann von Kunststoff umgossen, wobei während des Spritzvorgangs ein Irennstempel als Niederhalter dient. Das heißt, daß der Trennstempel auch von der Innenseite des Deckels aus durch einen Durchbruch im Deckel hindurch die Verbindungsstege durchtrennt.

Während der Durchtrennung der Verbindungsstege müssen die Leiterbahnen auf der dem Trennstempel gegenüberliegenden Seite im Bereich der Verbindungsstege durch wenigstens einen Niederhalter abgestützt werden: Vorteilhafterweise wird nun dieser wenigstens eine Niederhalter während des Spritzgießvorgangs von den Leiterbahnen zurückbewegt, wie es an sich aus der DE-PS 32 28 214 bekannt ist. So wird auf einfache Weise erreicht, daß die Leiterbahnen auf der Außenseite des Deckels nicht blank liegen.

Ein erfindungsgemäßes Ausführungsbeispiel eines elektrischen Motors sowie ein Spritzwerkzeug sind in den Zeichnungen dargestellt. Anhand der Figuren dieser Zeichnungen wird die Erfindung nun näher erläutert.

Es zeigen:
- Figur 1: einen erfindungsgemäßen elektrischen Motor in einer Außenansicht In einer Richtung senkrecht zum Deckel des Getriebetopfes,
- Figur 2: den elektrischen Motor aus Figur 1 teilweise im Längsschnitt, teilweise in Ansicht bei abgenommenem Deckel des Getriebetopfes,
- Figur 3: den Deckel aus Figur 1 in einer Innenansicht,
- Figur 4: den Deckel aus den Figuren 1 und 3 als Halbzeug noch ohne Leiterbahnen und Kunststofformteil,
- Figur 5: ein Stanzgitter mit fünf Leiterbahnen zum Einbetten in das an den Deckel angespritzte Kunststofformteil,
- Figur 6: eine Ansicht des Stanzgitters nach Figur 5 in Richtung des Pfeiles A,
- Figur 7: einen Schnitt entlang der Linie VII-VII aus Figur 5,
- Figur 8: einen Schnitt durch das Kunststofformteil in Höhe der Leiterbahnen und parallel zum Deckel,
- Figur 9: einen Schnitt entlang der Linie IX-IX aus Figur 8,
- Figur 10: einen Schnitt entlang der Linie X-X aus Figur 8,
- Figur 11: einen Schnitt entlang der Linie X1-X1 aus Figur 8,
- Figur 12: in einem gegenüber Figur 11 vergrößerten Maßstab zwei benachbarte Leiterbahnen nach der abfallosen Durchtrennung eines Verbindungssteges zwischen ihnen (Einhelheit Z aus Figur 11) und
- Figur 13: eine Prinzipdarstellung eines Spritzwerkzeugs zur Herstellung eines an einen Deckel aus den vorhergehenden Figuren angespritzten Kunststofformteils mit eingebetteten Leiterbahnen.

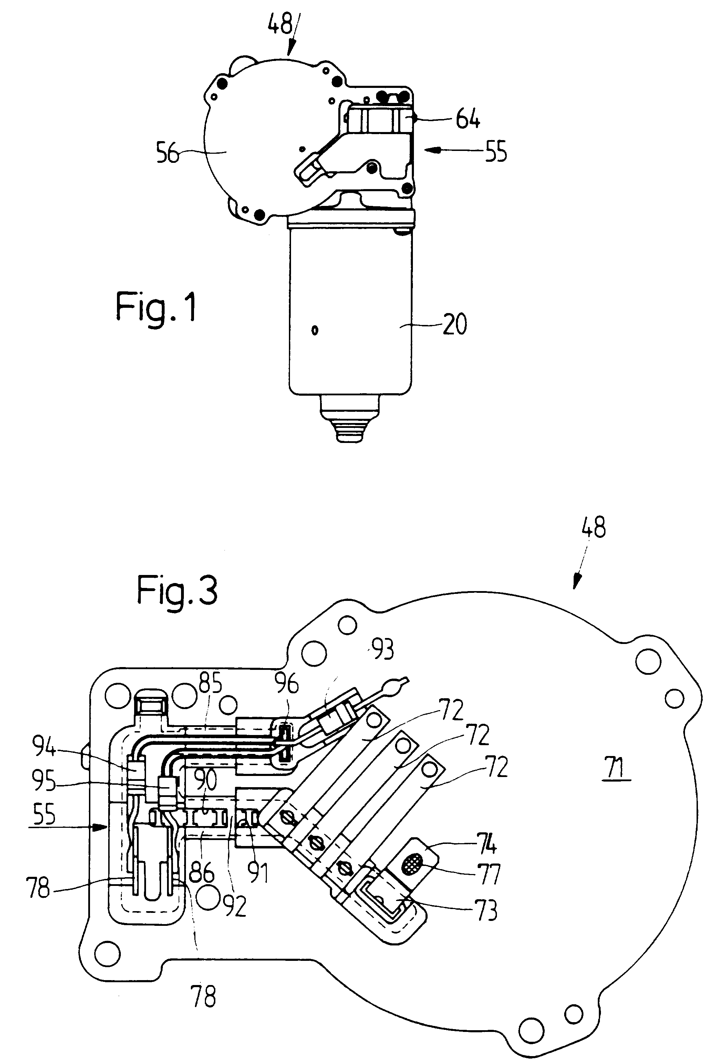

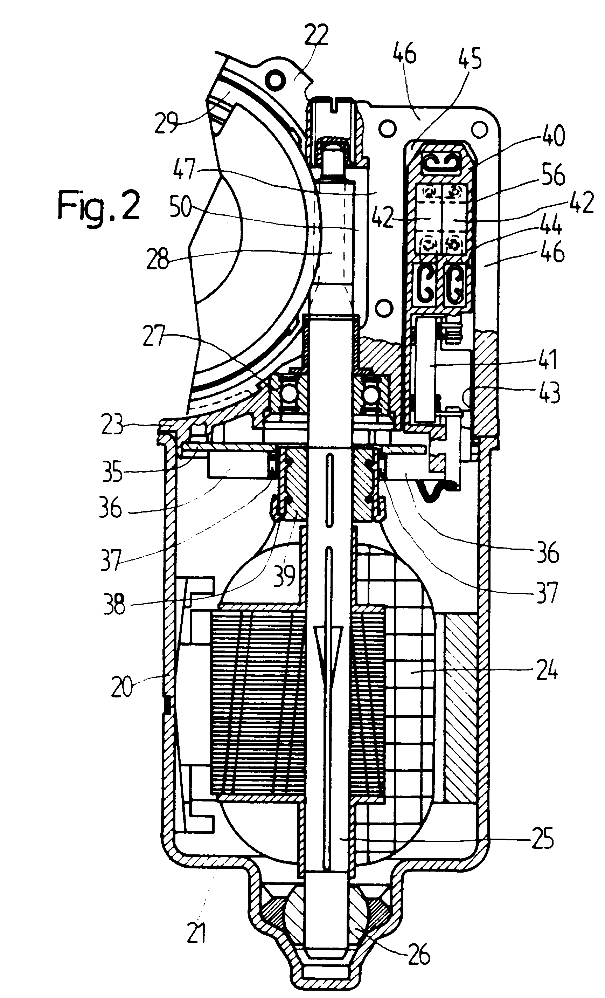

Der Scheibenwischermotor aus den Fig. 1 und 2 besitzt ein tiefgezogenes, topfförmiges Motorgehäuse 20 mit einem Boden 21. An der offenen Seite ist an das Motorgehäuse ein Getriebetopf 22 mit einem Lagerschild 23 angeflanscht. Der Anker 24 des Motors ist mit seiner Welle 25 in einem Kalottenlager 26 am Boden 21 und einem Kugellager 27 auf der in das Motorgehäuse zeigenden Innenseite des Lagerschilds 23 drehbar gelagert. Die Ankerwelle 25 ragt durch einen Durchbruch im Lagerschild 23 hindurch in eine Kammer 50 des Getriebetopfes 22 hinein und ist dort als Schnecke 28 ausgebildet, die mit einem im Getriebetopf 22 gelagerten Schneckenrad 29 kämmt. Auf der Innenseite des Lagerschilds 23 ist eine völlig ebene Kohlenhalterplatte 35 befestigt, die senkrecht auf der Ankerwelle 25 steht und auf ihrer dem Lagerschild 23 abgewandten Seite drei metallische Köcher 36 trägt, von denen in Figur 2 zwei sichtbar sind. In den Köchern 36 befinden sich Schleifkohlen 37, die unter Federdruck auf den Lamellen 38 des Kommutators 39 aufliegen.

Von der dem Lagerschild 23 zugewandten Seite der Kohlenhalterplatte 35 aus steht senkrecht eine Halterung 40 aus Kunststoff hoch, in die zwei Entstörspulen 41 und zwei Entstörkondensatoren 42 eingesetzt sind. Die Halterung 40 tritt durch einen nach außen geschlossenen Durchgang 43 des Lagerschilds 23 hindurch und liegt in einer Kammer 50 des Getriebetopfes 22, die sich, vom Schneckenrad 29 aus gesehen, jenseits der Schnecke 28 befindet. Die Kammer 44 ist durch den Boden 45 und durch Seitenwände 46 des Getriebetopfes 22 nach außen abgeschlossen. Von der Kammer 50 des Getriebetopfes 22, in der sich die Schnecke 28 und das Schneckenrad 29 befinden, ist die Kammer 44 durch eine Zwischenwand 47 getrennt, die parallel zur Schnecke 28 verläuft und die genauso hoch wie die Seitenwände 46 des Getriebetopfes 22 ist. Die oberen Kanten der Seitenwände 46 und der Zwischenwand 47 des Getriebetopfes 22 dienen als Auflageflächen für einen Deckel 48, der aus einem ebenen Blech ausgestanzt ist und den Getriebetopf 22 einschließlich der Kammer 44 verschließt. Auch im Bereich des Durchgangs 43 ist der Auflagerand für den Deckel 48 entlang des Lagerschilds 23 geführt, so daß der Deckel 48 die Kammer 44 rundum gut abdichten kann.

Natürlich kann zwischen dem Deckel 48 und Getriebetopf 22 eine Flachdichtung liegen.

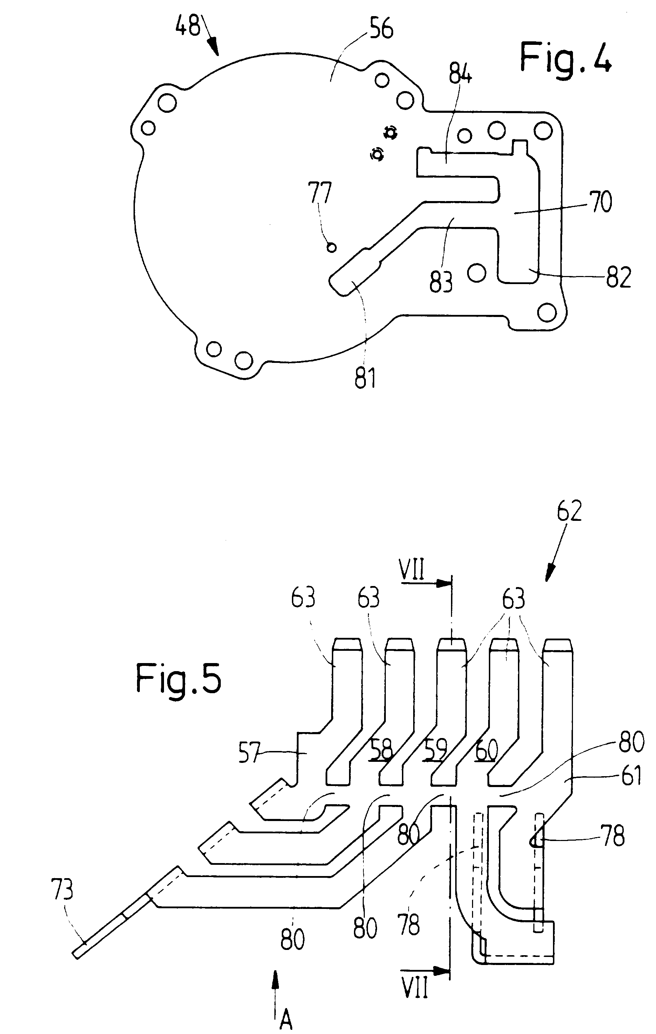

An den Deckel 48 ist ein Kunststofformteil 55 angeformt, das sich im wesentlichen auf der Außenseite 56 des Deckels befindet, als Steckergehäuse ausgebildet ist und in das fünf Leiterbahnen 57 bis 61 eingebettet sind. Die Leiterbahnen 57 bis 61 sind, wie in Figur 5 dargestellt, als ein zusammenhängendes Stanzgitter 62 aus einem Blech ausgestanzt und liegen größtenteils in einer zur Ebene des Deckels 48 parallelen Ebene. Am einen Ende sind die Leiterbahnen als Flachstecker 63 ausgebildet, die parallel zueinander angeordnet sind, mit ihren Flachseiten parallel zum Deckel 48 liegen und in einen als Halterahmen für einen Gegenstecker dienenden Abschnitt 64 des Kunststofformteils 55 hineinragen. Die den Flachsteckern 63 gegenüberliegenden Enden der Leiterbahnen sind in einer Richtung senkrecht zum Deckel 48 abgebogen und ragen durch einen Durchbruch 70 des Deckels hindurch in das Innere des Getriebetopfes 22. Die Enden 65 der Leiterbahnen 57, 58 und 59 liegen mit ihren Flachseiten in einer Ebene und ragen nur knapp über die Innenseite 71 des Deckels 38 hinaus. Auf jedem Ende 65 der Leiterbahnen 57 bis 59 ist eine Schleiffeder 72 befestigt, die zu einem nicht näher dargestellten, jedoch in allgemein bekannter Weise ausgebildeten Parkstellungsschalter des betrachteten Wischermotors gehören.

Vom Ende 65 der Leiterbahn 59 geht seitlich noch ein Blechabschnitt 73 ab, der nach dem Stanzen und Biegen des Stanzgitters 62 zunächst in dieselbe Richtung wie die Enden 65 zeigt und über diese hinausragt. Das Ende 74 des Blechabschnitts 73 ist dünner als die Leiterbahnen gemacht und mit einem Langloch 75 versehen. In dem dickeren Teil des Blechabschnitts 73 befindet sich ein Durchbruch 76, der eine Sollbiegestelle in dem Blechabschnitt 73 schafft. Wie man aus Figur 3 ersieht, wird nach dem Einbetten des Stanzgitters 62 in das Kunststofformteil 55 der Blechabschnitt 73 an der Sollbiegestelle so umgebogen, daß er auf der Innenseite 71 des Deckels 48 aufliegt. Dabei ist eine eingedrückte Warze 77 des Deckels 48 in das Langloch 75 gelangt. Die Warze wird anschließend verstemmt, so daß das Ende 74 des Blechabschnitts 73 am Deckel gehalten und eine elektrisch leitende Verbindung zum Deckel hergestellt ist. Die Dicke des Endes 74 des Blechabschnitts 73 ist verringert, weil die Dicke des Materials, aus dem der Deckel 48 ausgestanzt ist, nur eine bestimmte Höhe der Warze 77 zuläßt.

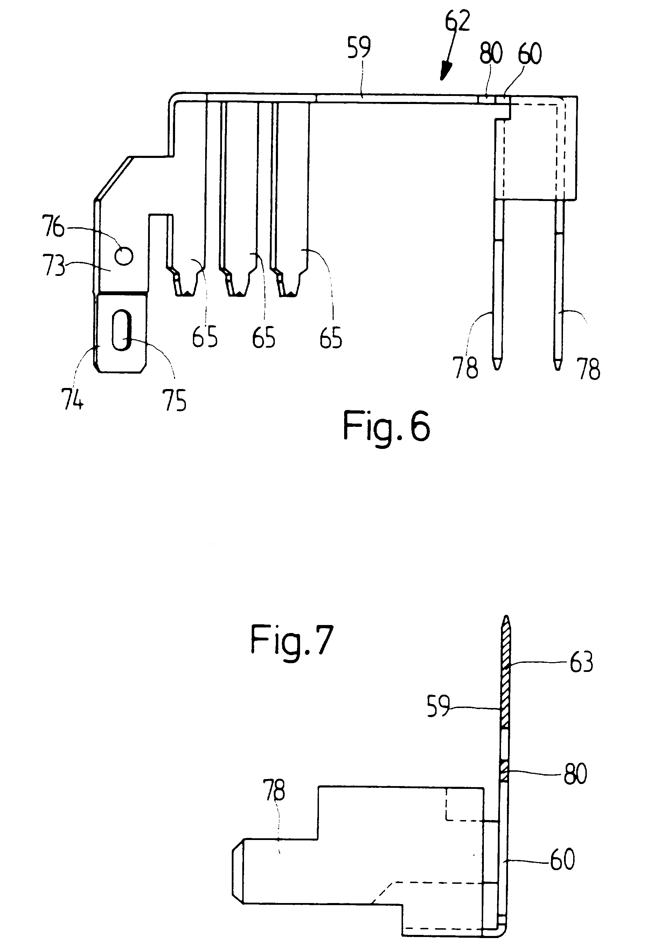

Die den Flachsteckern 63 der Leiterbahnen 60 und 61 gegenüberliegenden Enden dieser Bahnen bilden Flachstecker 78, die wie die Enden 65 der Leiterbahnen 57 bis 59 senkrecht zur Ebene des Deckels 48 gerichtet sind, die Enden 65 jedoch weit überragen. Die Richtung und die richtige Lage des Flachsteckers 78 der Leiterbahn 61 hat man dabei durch einfaches Umbiegen des Flachsteckers um 90° um eine in der Ebene der Flachstecker 63, die als Vorzugsebene des Stanzgitters 62 bezeichnet sein möge, liegende Biegekante erhalten. Um den Flachstecker 78 der Leiterbahn 60 in die notwendige Richtung und die gewünschte Lage zu bringen, waren dagegen zwei Biegungen um jeweils 90° um zwei aufeinander senkrecht stehende Biegekanten notwendig. Beim fertiggebogenen Stanzgitter 62 liegen sich die beiden Flachstecker 78 schließlich mit zwei Flachseiten genau gegenüber, wie dies den Figuren 3, 5 und 7 entnommen werden kann.

Damit das Stanzgitter 62 zunächst als ein einziges Bauteil gehandhabt werden kann, sind beim Ausstanzen zwischen den Leiterbahnen schmale Verbindungsstege 80 stehengelassen worden. Wie man deutlich aus Figur 5 ersehen kann, ist jede Leiterbahn mit einer benachbarten Leiterbahn über einen einzigen Verbindungssteg 80 verbunden, so daß für die fünf Leiterbahnen 57 bis 61 insgesamt vier Verbindungsstege 80 vorhanden sind. Diese liegen in der Vorzugsebene des Stanzgitters 62 und sind in einer geraden Linie hintereinander angeordnet.

Damit die Enden 65 der Leiterbahnen 57, 58 und 59, der Blechabschnitt 73 und die beiden Flachstecker 78 der Leiterbahnen 60 und 61 von der Außenseite 56 des Deckels 48 auf die Innenseite 71 gelangen können, ist es an sich nur notwendig, daß der Deckel im Bereich der genannten Leiterbahnenden durchbrochen ist. Zu Handhabung des Stanzgitters 62 in der Spritzgießmaschine und zur Halterung zusätzlicher elektrischer Bauteile am Kunststofformteil 55 und zur besseren Verankerung dieses Teils am Deckel 48 ist jedoch ein einziger Durchbruch 70 vorgesehen, wie er besonders deutlich mit einem Anschlußdraht an den Deckel 48 angeschweißt. Die Diode 94 ist mit einem Anschlußdraht an den einen Flachstecker 78 und die Diode 95 mit einem Anschlußdraht an den anderen Flachstecker 78 angeschweißt. Mit den jeweils anderen Anschlußdrähten sind alle drei Dioden gemeinsam an einen in das Kunststoffteil 55 von der Innenseite 71 des Deckels 78 her eingesetzten Lötstützpunkt 96 angelötet. Die beiden Anschlußdrähte der beiden sich in der Kammer 44 des Getriebetopfes befindlichen Dioden 94 und 95 verlaufen dabei in zwei Rinnen 97 und 98. Die Rinnen werden durch die Urähte weitgehend ausgefüllt, so daß durch sie hindurch kein Fett von der Kammer 50 zur Kammer 44 des Getriebetopfes gelangen kann.

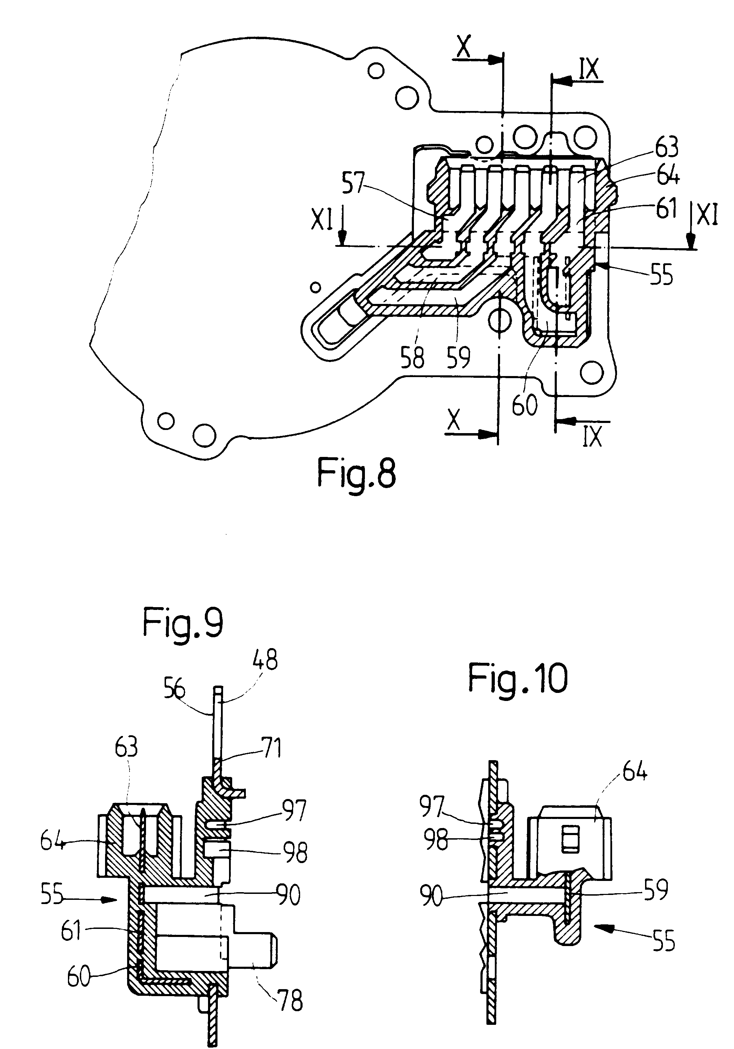

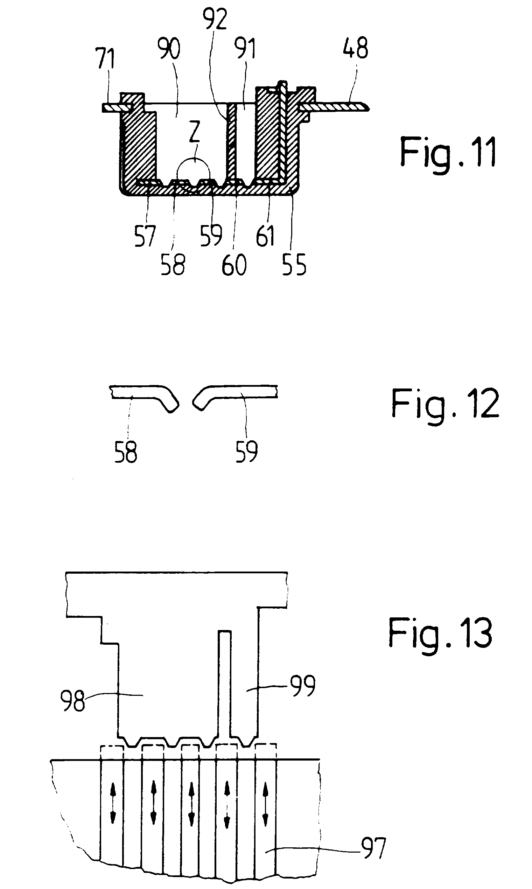

Zur Herstellung des in den Figuren 8 bis 11 gezeigten Teiles bestehend aus dem Deckel 48, den Leiterbahnen 57 bis 61 und dem Kunststofformteil 55 werden zunächst der Deckel 48 und das Stanzgitter 62 in ein Spritzgießwerkzeug eingelegt. Das Stanzgitter 62 wird außen durch die in Richtung der Doppelpfeile nach Figur 13 bewegbaren und vorgefahrenen Niederhalter 97 außen und durch die beiden trennstempel 98 und 99, die durch den Durchbruch 70 des Deckels 48 hindurchragen, innen abgestützt. Dabei haben die Trennstempel 98 und 99 beim Schließen des Spritzgießwerkzeugs die Verbindungsstege 80 zwischen den Leiterbahnen abfallos durchtrennt, wobei der ehemalige Verbindungssteg zwischen zwei Leiterbahnen die aus Figur 12 ersichtliche Form erhalten hat. Danach wird der Kunststoff eingespritzt, wobei die Trennstempel 98 und 99 ihre Lage beibehalten und als Niederhalter dienen, während die Niederhalter 97 bis auf Höhe der sie umgebenden Werkzeugoberfläche zurückbewegt werden, wenn bestimmter Füllgrad der Form erreicht ist. Auf diese Weise erhält man eine vollkommene überdeckung der Leiterbahnen. Die beiden Trennstempel 98 und 99 haben einen Abstand voneinander und lassen daher während des Spritzvorgangs zwischen sich den Trennsteg 92 entstehen.

Nach der Herstellung des Bauteils gemäß den Figuren 8 bis 11 werden noch die Dioden 93, 94 und 95 montiert und der Blechabschnitt 73 umgebogen und am Deckel vernietet. Danach kann der Deckel auf den Getriebetopf aufgesetzt werden, in dem sich bereits die Getriebeteile und die Halterung 40 mit den aus Figur 4 hervorgeht. Bei diesem Durchbruch 70 sind also der Bereich 81 für das Hindurchtreten der Enden 65 und des Blechabschnitts 73 und der Bereich 82 für das Hindurchtreten der Flachstecker 78 über einen Bereich 83 miteinander verbunden. Außerdem ist ein zusätzlicher Bereich 84 vorhanden.

Das Kunststofformteil 55 übergreift außer in zwei Bereichen 85 und 86 die Innenseite 71 des Deckels 48 am Rand des Durchbruchs 70 und ist dadurch an diesem verankert. Die zwei genannten Bereiche befinden sich über der Zwischenwand 47 des Getriebetopfes 22. In ihnen fluchtet das Kunststofformteil 55 mit der Innenseite 71 des Deckels. Durch eine leichte Anfasung des Randes des Durchbruchs 70 kann man jedoch auch in den Bereichen 85 und 86 einen Hinterschnitt für das Kunststofformteil 55 erhalten, so daß es auch dort sicher hält und der Durchbruch 70 im Deckel 48 gut abgedichtet ist. Außer an den Flachsteckern 63 deckt das Kunststofformteil 55 die Leiterbahnen 57 bis 61 auf der Außenseite 56 des Deckels 48 vollkommen ab.

Im Bereich 83 des Durchbruchs 70, über den sich vor dem Einbetten im Kunststoff die Verbindungsstege 80 des Stanzgitters 62 befinden, besitzt das Kunststofformteil 55 zwei Aussparungen 90 und 91, die, wie man in Figur 3 erkennen kann und wie besonders deutlich aus den Figuren 9, 10 und 11 hervorgeht, zur Innenseite 71 des Deckels 48 hin offen sind und bis zu den Leiterbahnen heranreichen. Die beiden Aussparungen 90 und 91 sind im Bereich 86 des Kunststofformteils 55 durch einen Trennsteg 92, der entsprechend seiner Lage innerhalb des Bereichs 86 mit der Innenseite 71 des Deckels 48 fluchtet, gegeneinander abgeschottet. Er verhindert, daß in der Kammer 50 des Getriebetopfes 22 befindliches Fett in die Kammer 44 und von dort eventuell sogar in das Motorengehäuse 20 an den Kollektor gelangen kann.

Aus Figur 10 wird deutlich, daß sich zwischen den Aussparungen 90 und 91 des Kunststofformteils und den Rand des Durchbruchs 70 noch Kunststoffmaterial befindet, daß also die Aussparungen 90 und 91 schmäler als der Durchbruch 70 sind, so daß das Kunststofformteil auch im Bereich der Aussparungen den Deckel 48 hintergreifen kann.

Das Kunststofformteil 55 nimmt auf der Innenseite 71 des Deckels 48 in drei flachen Aussparungen noch drei Dioden 93, 94 und 95 auf. Die Diode 93 ist Entstörbauteilen befinden. Dabei werden auch elektrisch Verbindungen zwischen den Flachsteckern 78 und diesen Bauteilen hergestellt. Die Aussparungen 90 und 91 können nachträglich noch mit einer Vergußmasse zumindest teilweise ausgefüllt werden.

## Patentansprüche

1. Elektrischer Motor, insbesondere elektrischer Kleinmotor zum Antrieb von Scheibenwischern an Kraftfahrzeugen, mit einem Getriebetopf (22) und mit einem metallischen Deckel (48) mit einer Außen- (56) und einer Innenseite (71) und mit einem Kunststofformteil (55), das im wesentlichen außen an den Deckel (48) angespritzt ist und in das mehrere aus einem Blech gestanzte, sich im wesentlichen auf der Außenseite (56) des Deckels (48) befindliche Leiterbahnen (57, 58, 59, 60, 61) eingebettet sind, wobei das Kunststofformteil (55) innerhalb eines Durchbruchs (70) im Deckel (48) wenigstens eine Aussparung (90, 91) aufweist, die zur Innenseite (71) des Deckels (48) hin offen ist und bis zu wenigstens einer Leiterbahn (57, 58, 59, 60, 61) heranreicht, **dadurch gekennzeichnet** daß die beim Ausstanzen der Leiterbahnen (57, 58, 59, 60, 61) aus einem Blech zwischen den Leiterbahnen (57, 58, 59, 60, 61) stehengebliebenen Verbindungsstege (80) abfallos durchtrennt sind und daß sich die Aussparung (90, 91) im Kunststofformteil (55) im Bereich eines durchtrennten Verbindungssteges (80) befindet.

2. Elektrischer Motor nach Anspruch 1, **dadurch gekennzeichnet**, daß sich zwischen der Aussparung (90, 91) und dem Rand des Durchbruchs (70) im Deckel (48) noch Kunststoffmaterial befindet.

3. Elektrischer Motor nach Anspruch 1 oder 2, **dadurch gekennzeichnet**, daß der Getriebekopf (22) eine Kammer (50) für Getriebeteile (28, 29) und eine Kammer (44) für elektrische Bauteile (41, 42), insbesondere Entstörbauteile aufweist, daß das Kunststofformteil (55) sowohl innerhalb der Kammer (50) für die Getriebeteile (28, 29) als auch innerhalb der Kammer für die elektrischen Bauteile (41, 42) eine bis zu einer Leiterbahn (57, 58, 59, 60, 61) reichende Aussparung (90, 91) besitzt und daß die beiden Aussparungen (90, 91) gegeneinander abgeschottet sind.

4. Elektrischer Motor nach Anspruch 3, **dadurch gekennzeichnet**, daß sich die beiden Aussparungen (90, 91) innerhalb desselben Durchbruchs (70) im Deckel (48) befinden und durch einen Trennsteg (92) des Kunststofformteils (55) voneinander getrennt sind, der bis zu einer Zwischenwand (47) zwischen den beiden Kammern (44, 50) des Getriebetopfes (22) reicht.

5. Elektrischer Motor nach Anspruch 4, **dadurch gekennzeichnet**, daß die Stirnseite des Trennstegs (92) mit der Innenseite (71) des Deckels (48) fluchtet.

6. Elektrischer Motor nach Anspruch 5, **dadurch gekennzeichnet**, daß mehrere, vorzugsweise alle Verbindungsstege (80) in einer Linie hintereinander angeordnet sind.

7. Verfahren zur Herstellung eines elektrischen Motors mit einem Getriebetopf (22) und mit einem metallischen Deckel (48) mit einer Außen- (56) und einer Innenseite (71) und mit einem Kunststofformteil (55), das im wesentlichen außen an den Deckel (48) angespritzt ist und in das mehrere aus einem Blech gestanzte, sich im wesentlichen auf der Außenseite (56) des Deckels (48) befindlichen Leiterbahnen (57, 58, 59, 60, 61) eingebettet sind, wobei Deckel (48) und Leiterbahn (57, 58, 59, 60, 61) in ein Spritzwerkzeug eingelegt und dann das Kunststofformteil (55) an den Deckel (48) und die Leiterbahnen (57, 58, 59, 50, 61) angespritzt wird, **dadurch gekennzeichnet**, daß die Leiterbahnen (57, 58, 59, 60, 61) während des Spritzvorgangs an einem Niederhalter (98, 99) des Spritzwerkzeugs abgestützt ist, der sich von der Innenseite (71) des Deckels (48) aus durch einen Durchbruch (70) des Deckels (48) hindurch bis zur Leiterbahn (57, 58, 59, 60, 61) erstreckt, daß die Leiterbahnen (57, 58, 59, 60, 61), die zunächst noch über einen oder mehrere Verbindungsstege (80) zusammenhängen, in das Spritzwerkzeug eingelegt werden, daß dann die Verbindungsstege (80) durch einen oder mehrere Trennstempel (98, 99) vorzugsweise abfallos durchtrennt werden und daß während des anschließenden Spritzvorgangs zumindest ein Trennstempel (98, 99) als Niederhalter dient, der sich von der Innenseite (71) des Deckels (48) aus durch einen Durchbruch (70) des Deckels (48) hindurch bis zur Leiterbahn (57, 58, 59, 60. 61) erstreckt.

8. Verfahren nach Anspruch 7, **dadurch gekennzeichnet**, daß mehrere Niederhalter (98, 99) vorhanden sind, die einen Abstand voneinander haben und während des Spritzvorgangs den Trennsteg (92) zwischen zwei Aussparungen (90, 91) des Kunststofformteils (55) entstehen lassen.

9. Verfahren nach einem der Ansprüche 7 bis 8, **dadurch gekennzeichnet**, daß die Leiterbahnen (57, 58, 59, 60, 61) während der Durchtrennung der Verbindungsstege (80) auf der dem Trennstempel (98, 99) gegenüberliegenden Seite durch wenigstens einen weiteren Niederhalter (97) abgestützt werden und daß der wenigstens eine Niederhalter (98) während des Spritzvorgangs von den Leiterbahnen (57, 58, 59, 60, 61) zurückbewegt wird.

10. Verfahren nach Anspruch 9, **dadurch gekennzeichnet**, daß der wenigstens eine Niederhalter (97) soweit zurückbewegt wird, daß seine Stirnseite mit einer angrenzenden Fläche des Spritzwerkzeugs fluchtet.

## Claims

1. An electric motor, in particular, a low power electric motor, for actuating windscreen wipers on automotive vehicles, comprising a gear box (22) and a metallic lid (48) having outer (56) and inner (71) sides, and comprising a plastic-moulded part (55) which is injection-moulded substantially externally to the lid (48), and in which are embedded several conductor tracks (57,58,59,60,61) punched from a plate and substantially provided on the outer side (56) of the lid (48), with the moulded part (55) within an opening (70) in the lid (48) being provided with at least one recess (90,91) open toward the inner side (71) of the lid (48) and extending down to at least one of the conductor tracks (57,58,59,60,61), characterized in that the connecting bridges (80) which, during punching of the conductor tracks (57,58,59,60,61) from a plate, are maintained between the conductor tracks (57,58,59,60,61) are cut off in a waste-free way, and that the recess (90,91) is contained in the plastic-moulded part (55) in the area of a cut-off connecting bridge (80).

2. An electric motor according to claim 1, characterized in that plastic material is still contained between the recess (90,91) and the rim of the opening (70) within the lid (48).

3. An electric motor according to claims 1 or 2, characterized in that the gear box (22) comprises a chamber (50) for gear components (28,29) and a chamber (44) for electric components (41,42), in particular, suppressor parts, that the plastic-moulded part (55) both within the chamber (50) for the gear components (28,29) and within the chamber for the electric components (41,42) comprises a recess (90,91) extending down to a conductor track (57,58,59,60,61), and that the two recesses (90,91) are sealed one against the other.

4. An electric motor according to claim 3, characterized in that the two recesses (90,91) are contained in the same opening (70) within the lid (48) and are separated from one another by a separating bridge (92) of the plastic-moulded part (55), extending down to a partition (47) between the two chambers (44,50) of the gear box (22).

5. An electric motor according to claim 4, characterized in that the front side of the separating bridge (92) is in alignment with the inner side (71) of the lid (48).

6. An electric motor according to claim 5, characterized in that several, preferably all, connecting bridges (80) are arranged in series along a line.

7. A process of manufacturing an electric motor comprising a gear box (22) and a metallic lid (48) having an outer (56) and an inner side (71) and a plastic-moulded part (55) which is substantially externally injection-moulded to the lid (48) and in which are embedded several conductor tracks (57,58,59,60,61) punched from a plate and substantially contained on the outer side (56) of the lid (48), with lid (48) and conductor track (57,58,59,60,61) being placed into an injection moulding tool and the plastic-moulded part (55) being moulded to the lid (48) and to the conductor tracks (57,58,59,60,61), characterized in that the conductor tracks (57,58,59,60,61), during the injection process, are supported on a down-hold (98,99) of the injection tool which extends from the inner side (71) of the lid (48) through an opening (70) of the lid (48) down to the conductor track (57,58,59,60,61), that the conductor tracks (57,58,59,60,61) initially interconnected through one or several connecting bridges (80) are placed into the injection tool, that the connecting bridges (80) are then cut off, preferably in a waste-free manner, by one or several separating stamps (98,99), and that, during the subsequent injection process, at least one separating stamp (98,99) serves as a hold-down which, from the inner side (71) of the lid (48), extends through an opening (70) of the lid (48) down to the conductor track (57,58,59,60,61).

8. A process according to claim 7, characterized in that several hold-down units (98,99) are provided that are spaced from one another and that, during the injection process, cause the separating bridge (92) between two recesses (90,91) of the plastic-moulded part (55) to be formed.

9. A process according to any one of claims 7 to 8, characterized in that the conductor tracks (57,58,59,60,61), during cutting the connecting bridges (80), on the side opposite the separating stamp (98,99) are backed up by at least one additional hold-down (97), and that the at least one hold-down (98), during the injection process, is moved back by the conductor tracks (57,58,59,60,61):

10. A process according to claim 9, characterized in that the at least one hold-down (97) is moved back to such an extent that the front side thereof is in alignment with an adjacent face of the injection tool.

## Revendications

1. Moteur électrique, notamment moteur électrique de faible puissance servant à l'entraînement des essuie-glace sur un véhicule automobile, comprenant une cuvette d'engrenage (22) et un couvercle métallique (48) présentant une face extérieure (56) et une face intérieure (71) et pourvu d'une pièce moulée en matière plastique (55) qui est formée par injection sur le couvercle (48), pour l'essentiel du côté extérieur, et dans laquelle sont noyées plusieurs pistes conductrices (57, 58, 59, 60, 61) découpées à l'emporte-pièce dans une tôle et situées pour l'essentiel sur la face extérieure (56) du couvercle (48), la pièce moulée en matière plastique (55) comportant, dans les limites d'une ouverture de passage (70) pratiquée dans le couvercle (48), au moins une partie évidée (90, 91) qui débouche sur la face intérieure (71) du couvercle (48) et s'étend jusqu'à au moins une piste conductrice (57, 58, 59, 60, 61), caractérisé en ce que les ponts de jonction (80) qui subsistent entre les pistes conductrices (57, 58, 59, 60, 61) lors du découpage à l'emporte-pièce de ces pistes conductrices (57, 58, 59, 60 61) dans une tôle sont découpés sans chute et en ce que la partie évidée (90, 91) réalisée dans la pièce moulée en matière plastique (55) est située dans la zone d'un pont de jonction (80) qui a été découpé.

2. Moteur électrique selon la revendication 1, caractérisé en ce que de la matière plastique est située en outre entre la partie évidée (90, 91) et le bord de l'ouverture de passage (70) pratiquée dans le couvercle (48).

3. Moteur électrique selon la revendication 1 ou 2. caractérisé en ce que la cuvette d'engrenage (22) comporte une chambre (50) prévue pour des pièces d'engrenage (28, 29) et une chambre (44) prévue pour des composants électriques (41, 42), notamment des composants d'antiparasitage, en ce que la pièce moulée en matière plastique (55) comporte, d'une part dans les limites de la chambre (50) prévue pour les pièces d'engrenage (28, 29) et d'autre part dans les limites de la chambre prévue pour les composants électriques (41, 42), une partie évidée (90, 91) qui s'étend jusqu'à une piste conductrice (57, 58, 59, 60, 61) et en ce que les deux parties évidées (90, 91) sont isolées l'une de l'autre à la façon d'une cloison étanche.

4. Moteur électrique selon la revendication 3, caractérisé en ce que les deux parties évidées (90, 91) sous situées dans les limites de la même ouverture de passage (70) pratiquée dans le couvercle (48) et sont séparées l'une de l'autre au moyen d'une partie séparatrice mince (92) de la pièce moulée en matière plastique (55) qui s'étend jusqu'à une cloison intermédiaire (47) située entre les deux chambres (44, 50) de la cuvette d'engrenage (22).

5. Moteur électrique selon la revendication 4, caractérisé en ce que la face frontale de la partie séparatrice mince (92) est située dans le plan de la face intérieure (71) du couvercle (48).

6. Moteur électrique selon la revendication 5, caractérisé en ce que plusieurs ponts de jonction (80), de préférence tous les ponts de jonction, sont disposés l'un à la suite de l'autre suivant une ligne.

7. Procédé de fabrication d'un moteur électrique, comprenant une cuvette d'engrenage (22) et un couvercle métallique (48) présentant une face extérieure (56) et une face intérieure (71) et pourvu d'une pièce moulée en matière plastique (55) qui est formée par injection sur le couvercle (48), pour l'essentiel du côté extérieur, et dans laquelle sont noyées plusieurs pistes conductrices (57, 58, 59, 60, 61) découpées à l'emporte-pièce dans une tôle et situées pour l'essentiel sur la face extérieure (56) du couvercle (48). selon lequel on place un couvercle (48) et des pistes conductrices (57, 58, 59, 60, 61) dans un moule d'injection, puis on forme la pièce moulée en matière plastique (55), par injection, sur le couvercle (48) et les pistes conductrices (57, 58, 59, 60, 61), caractérisé en ce que, pendant l'opération d'injection, on place les pistes conductrices (57, 58, 59, 60, 61) en appui sur un organe de retenue (98, 99) du moule d'injection qui, à travers une ouverture de passage (70) du couvercle (48), s'étend de la face intérieure (71) du couvercle (48) jusqu'à la piste conductrice (57, 58, 59, 60, 61), en ce qu'on place dans le moule d'injection les pistes conductrices (57, 58, 59, 60, 61) qui sont initialement encore d'un seul tenant par l'intermédiaire d'un ou plusieurs ponts de jonction (80), en ce qu'on découpe ensuite, de préférence sans chute, les ponts de jonction (80) au moyen d'un ou plusieurs poinçons de sectionnement (98, 99) et en ce que, pendant l'opération d'injection qui suit, on se sert d'au moins un poinçon de sectionnement (98, 99) en tant qu'organe de retenue, lequel, à travers une ouverture de passage (70) du couvercle (48), s'étend de la face intérieure (71) du couvercle (48) jusqu'à la piste conductrice (57, 58, 59, 60, 61).

8. Procédé selon la revendication 7, caractérisé en ce qu'il est prévu plusieurs organes de retenue (98, 99) qui présentent un certain espacement entre eux et qui, pendant l'opération d'injection, permettent que la partie séparatrice mince (92) se forme entre deux parties évidées (90, 91) de la pièce moulée en matière plastique (55).

9. Procédé selon l'une des revendications 7 à 8, caractérisé en ce que, pendant le découpage des ponts de jonction (80), on place les pistes conductrices (57, 58, 59, 60, 61) en appui sur au moins un autre organe de retenue (97), du côté situé à l'opposé du poinçon de sectionnement (98, 99), et en ce que, pendant l'opération d'injection, on fait reculer le ou les organes de retenue (98) vis-à-vis des pistes conductrices (57, 58, 59, 60, 61).

10. Procédé selon la revendication 9, caractérisé en ce qu'on fait reculer le ou les organes de retenue (97) dans une mesure telle que leur face frontale vient dans le plan d'une surface du moule d'injection qui en est voisine.
